# EUROPÄISCHE PATENTSCHRIFT

(11) **EP 2 473 755 B1**
(45) Veröffentlichungstag und Bekanntmachung des Hinweises auf die Patenterteilung: **25.02.2015**
(21) Anmeldenummer: 10732937.7
(22) Anmeldetag: 13.07.2010
(51) Int. Cl.: F16F 1/377

(54) **HALTERUNG ZUR BEFESTIGUNG EINES AGGREGATS**
MOUNTING ELEMENT FOR ATTACHING AN ASSEMBLY
SYSTÈME D'ATTACHE POUR LA FIXATION D'UN GROUPE

(30) Priorität: 01.09.2009 DE 102009029067
(43) Veröffentlichungstag der Anmeldung: 11.07.2012
(73) Patentinhaber: Robert Bosch GmbH, 70442 Stuttgart (DE)
(72) Erfinder: HEIN, Bernd, 72270 Baiersbronn/Schoenmuenzach (DE); MAHFOUDH, Samir, 77815 Buehl (DE)
(86) Internationale Anmeldenummer: PCT/EP2010/060003
(87) Internationale Veröffentlichungsnummer: WO 2011/026676

(56) Entgegenhaltungen:
- EP-A1- 0 381 566
- EP-A2- 0 132 502
- EP-A2- 0 213 543
- DE-A1-102004 056 884
- GB-A- 1 516 572
- US-A1- 2006 125 165
- US-A1- 2008 100 016
- US-B1- 6 513 801

## Beschreibung

Die Erfindung betrifft eine Halterung zum Befestigen eines Aggregats, insbesondere zum Befestigen einer Pumpe an einem Anbau. Die Halterung weist einen Bügel und ein Dämpfungselement auf, die das Aggregat teilweise umfassen. Das Dämpfungselement weist eine Ausnehmung auf, die zur Aufnahme des Aggregats vorgesehen ist. Ferner weist das Dämpfungselement eine Anlagefläche zur Anlage des Bügels auf. Der Bügel ist dazu vorgesehen, um das Dämpfungselement an dem Anbau zu befestigen.

### Stand der Technik

Ein Aggregat wird an einem Anbau, vorzugsweise an einem Motoranbau eines Kraftfahrzeugs befestigt. Das Aggregat ist dabei extremen Bedingungen, wie z.B. Schüttelbelastungen und Temperaturen ausgesetzt, die zur Schädigung des Aggregats führen können. Zum Befestigen des Aggregats an dem Anbau ist eine Halterung angeordnet, die aus einem Bügel und einem Dämpfungselement ausgebildet ist. Vorzugsweise ist der Bügel aus Blech und das Dämpfungselement aus Gummi ausgebildet. Die Halterung muss die Spezifikationsanforderungen bzw. die Einsatzbedingungen hinsichtlich der Schwingungs- und Festigkeitsverhalten über ihre Lebensdauer erfüllen. Des Weiteren ist die Eigenfrequenz/ Resonanzfequenz der einzelnen Bauteile einer Baugruppe, bedingt durch die unterschiedlichen Werkstoffdämpfungen, Steifigkeiten und Verbindungsarten, unterschiedlich. Um grundsätzlich die benötigte Lebensdauer der Bauteile realisieren zu können, muss die Eigenfrequenz möglichst vermieden oder deren Amplitude gedämpft werden.

Eine derartige Halterung ist z.B durch die EP 0 132 502 bekannt.

### Offenbarung der Erfindung

Aufgabe der Erfindung ist es, eine Halterung für ein Aggregat mit einem verbesserten Schwingungs- und Festigkeitsverhalten zu realisieren.

Die Aufgabe der Erfindung wird durch eine Halterung zum Befestigen eines Aggregats nach Anspruch 1 gelöst. Weitere vorteilhafte Ausführungsformen der Erfindung sind in den abhängigen Ansprüchen angegeben.

Erfindungsgemäß ist eine Halterung zum Befestigen eines Aggregats, insbesondere einer Pumpe an einem Anbau vorgesehen. Dabei weist die Halterung einen Bügel und ein Dämpfungselement auf, wobei das Dämpfungselement eine erste Ausnehmung umfasst, die zur Aufnahme des Aggregats vorgesehen ist. Das Dämpfungselement weist angrenzend an die erste Ausnehmung eine zweite Ausnehmung auf, die eine radial symmetrische Verformung des Querschnitts der ersten Ausnehmung beim Befestigen des Bügels an dem Anbau unterstützt.

Das Dämpfungselement umfasst eine dritte Ausnehmung als ein Ausschnitt, wobei die Querschnittsfläche der Ausschnitte abhängig von der Position der ersten Ausnehmung von der Mitte des Bügels bis zum Bügelende zunimmt. Dadurch kann eine Oberflächenvergrößerung des Dämpfungselements und somit eine bessere Wärmeabfuhr erreicht, werden. Des Weiteren wird eine geringere Schwingmaßamplitude durch die geringe Masse des Dämpfungselements erreicht.

Ein Vorteil der erfindungsgemäßen Halterung besteht darin, dass die Befestigung des Aggregats verbessert ist. Insbesondere werden aufgrund des Dämpfungselements die Schüttelbelastungen reduziert. Mit der zweiten Ausnehmung ist die Steifigkeit des Dämpfungselements über den Umfang des Aggregats wenigstens annähernd konstant, was zu einer besseren Klemmverbindung des Aggregats führt.

In einer Ausführungsform der Erfindung ist die zweite Ausnehmung als Schlitz ausgebildet, wobei der Durchmesser der Schlitze abhängig von der Position der Schlitze in Richtung auf ein Bügelende abnimmt. Mit Hilfe der zweiten Ausnehmung kann für einen besseren Halt zwischen dem Dämpfungselement und dem Aggregat gesorgt werden. Ferner kann eine bessere Klemmverbindung des Aggregats sichergestellt werden, aufgrund einer annähernd konstanten Steifigkeit des Dämpfungselements.

Gemäß einer weiteren Ausführungsform der Erfindung ist eine vierte Ausnehmung als Loch im Dämpfungselement vorgesehen, wobei mindestens zwei Löcher einen unterschiedlichen Durchmesser aufweisen. Aufgrund der Löcher im Dämpfungselement kann eine geringe Schwingmaßamplitude des Dämpfungselements erreicht werden. Ferner sorgt das mit Löchern versehende Dämpfungselement für eine bessere Wärmeabfuhr sowie für eine Oberflächenvergrößerung des Dämpfungselements.

Ferner ist gemäß einer weiteren Ausführungsform der Erfindung das Dämpfungselement im Bereich der Anlagefläche in einer Ebene des Bügels als Flanke keilförmig ausgebildet. Durch das Zusammendrücken der Flanke am Dämpfungselement kann eine konstante Pressung zwischen dem Dämpfungselement und dem Aggregat sichergestellt werden. Somit kann sich das Dämpfungselement an die Konturen des Aggregats anpassen.

Die Erfindung wird im Folgenden anhand von Ausführungsbeispielen unter Bezugnahme auf die beigefügten Zeichnungen näher erläutert. In den Zeichnungen zeigen:
- Fig. 1: eine Halterung zum Anbringen einer Pumpe in einem nicht montierten Zustand eines Bügels;
- Fig. 2: die in Fig. 1 gezeigte Halterung zum Anbringen einer Pumpe in einem montierten Zustand des Bügels;
- Fig. 3: eine Schnittansicht des Dämpfungselements;
- Fig. 4: eine schematische Darstellung des Bügels;
- Fig. 5A und Fig. 5B: Draufsichte des Bügels mit einer Buchse oder einer Lasche; und
- Fig. 6: eine schematische Darstellung eines Bügelendes und einer Anlagefläche.

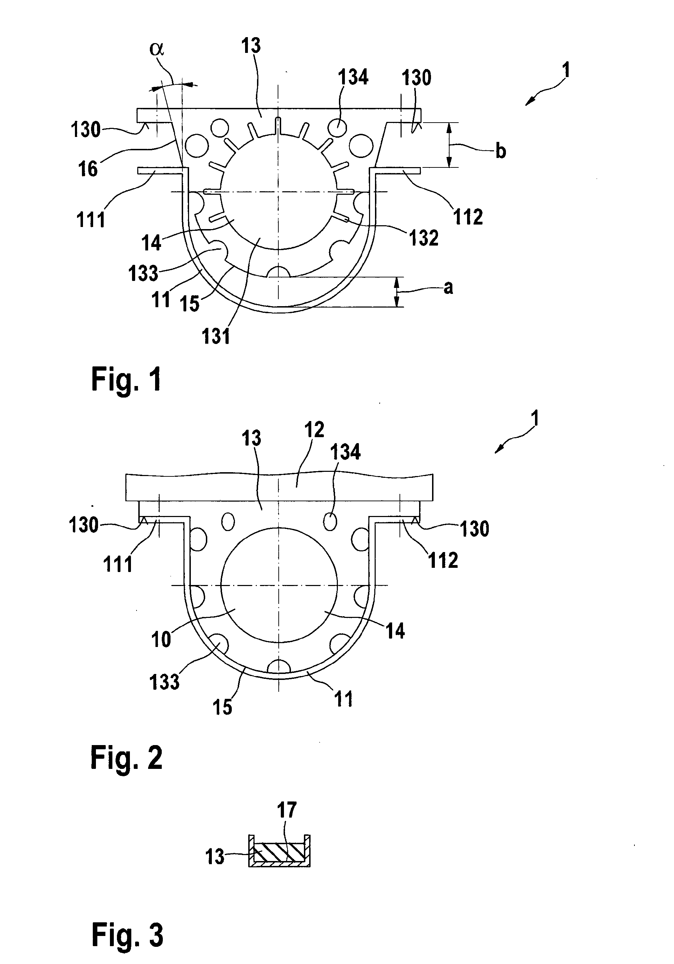

Figur 1 zeigt eine schematische Darstellung einer Halterung 1 mit einem Bügel 11 und einem Dämpfungselement 13 in einem nicht montierten Zustand. Das Dämpfungselement 13 umfasst eine Anlagefläche 130 zur Anlage des Bügels 11. Der Bügel 11 weist zwei Bügelenden 111, 112 auf, die zur Befestigung des Dämpfungselements 13 an dem Anbau 12, wie in Figur 2 gezeigt ist, vorgesehen sind. Die Anlagefläche 130 des Dämpfungselements 13 ist dabei zwischen dem Bügelende 111, 112 und dem Anbau 12 angeordnet und ist rechteckförmig ausgebildet. Ferner umfasst das Dämpfungselement 13 eine erste Ausnehmung 131, die zur Aufnahme der Pumpe 10 angeordnet ist. Die erste Ausnehmung 131 ist zentral im Dämpfungselement 13 angeordnet, so dass die Pumpe 10 gleichmäßig gedämpft wird. Aufgrund der Halterung 1 kann ein verbessertes Schwingungs- und Festigkeitsverhalten unter einer Sinus- bzw. Breitbandrauschanregung von 200 m/s² und einer Temperatur von 120 °C realisiert werden.

Vorzugsweise weist das Dämpfungselement 13 eine zweite Ausnehmung 132 auf, die als ein Schlitz ausgebildet ist, dabei mündet die zweite Ausnehmung 132 in die erste Ausnehmung 131. Es sind mindestens zwei Schlitze im Innenbereich 14 des Dämpfungselements 13 radialsymmetrisch zu einem Mittelpunkt der ersten Ausnehmung 131 angeordnet. Die Schlitze sind zwischen den Bügelenden 111, 112 vorgesehen, wobei der Durchmesser der Schlitze abhängig von der Position der Schlitze in Richtung auf ein Bügelende 111, 112 abnimmt. Ferner ist der Schlitz rechteckförmig ausgebildet, wobei die schmalere Seite des Schlitzes in die erste Ausnehmung 131 mündet. Der Schlitz, der zwischen den Bügelenden 111, 112 in der Mitte der ersten Ausnehmung 131 angeordnet ist, weist den breitesten Durchmesser auf. Davon ausgehend sind jeweils 5 Schlitze in Richtung auf eine Bügelende 111, 112 angeordnet. Alternativ können mehr oder weniger Schlitze im Dämpfungselement 13 angeordnet sein. Aufgrund der radial angeordneten Schlitze kann ein besserer Halt zwischen dem Dämpfungselement 13 und der Pumpe 10 ermöglicht werden. Ferner kann durch die unterschiedlichen Durchmesser der Schlitze eine Steifigkeit des Dämpfungselements 13 wenigstens annähernd konstant über den gesamten Umfang erreicht werden, was zu einer verbesserten Klemmverbindung der Pumpe 10 führt.

Das Dämpfungselement 13 umfasst eine dritte Ausnehmung 133, die als Ausschnitt in einem äußeren Wandbereich 15 des Dämpfungselements 13 ausgebildet ist. Dabei ist der äußere Wandbereich 15 am Dämpfungselement 13, der Bereich der dem Bügel 11 zugewandt ist. Die dritte Ausnehmung 133 ist in einer Ebene des Bügels 11 angeordnet, wobei mindestens zwei Ausschnitte im äußeren Wandbereich 15 des Dämpfungselements 13 angeordnet sind. Die Ausschnitte sind halbkreisförmig ausgebildet. Die Querschnittsfläche der Ausschnitte abhängig von der Position der ersten Ausnehmung 131 von der Mitte des Bügels 11 bis zum Bügelende 111, 112 zunimmt. Ausgehend vom dem Ausschnitt in der Mitte des Bügels 11 sind auf beiden Seiten des äußeren Wandbereichs 15 bis zum Bügelende 111, 112 jeweils zwei Ausschnitte angeordnet. Jedoch können mehr oder weniger Ausschnitte im Dämpfungselement 13 vorgesehen sein.

Im Dämpfungselement 13 ist eine vierte Ausnehmung 134 als Loch im Bereich der Anlagefläche 130 in einer Ebene des Bügels 11 in einem nicht montierten Zustand vorgesehen. Jedoch sind mindestens zwei Löcher mit einem unterschiedlichen Durchmesser im Dämpfungselement 13 angeordnet. Das Loch, das in der Nähe zum Anbau 12 angeordnet ist, ist kleiner ausgebildet als das Loch, das in der Nähe zum äußeren Wandbereich 15 angeordnet ist. Im montierten Zustand weisen die Löcher im Dämpfungselement 13 eine elliptische Form auf. Durch die dritte Ausnehmung 133 und die vierte Ausnehmung 134 im Dämpfungselement 13 kann eine Oberflächenvergrößerung des Dämpfungselements 13 erreicht werden, so dass eine bessere Wärmeabfuhr im Dämpfungselement 13 ermöglicht wird. Ferner kann eine geringe Schwingamplitude aufgrund der geringen Masse des Dämpfungselements 13 erreicht werden.

Das Dämpfungselement 13 ist im Bereich der Anlagefläche 130 in einer Ebene des Bügels 11 in einem nicht montierten Zustand des Bügels 11 breiter ausgebildet als der Abstand der Bügelenden 111, 112 bei montierten Bügel 11. Dadurch wird das Dämpfungselement 13 im montierten Zustand des Bügels 11 im Bereich der Anlageflächen 130 durch die Bügelenden 111, 112 zusammengedrückt. Das Dämpfungselement 13 ist im Bereich der Anlagefläche 130 in einer Ebene des Bügels 11 vorzugsweise als Flanke 16 keilförmig sich in Richtung der Bügelenden 111, 112 verbreiternd in Richtung der Anlagefläche 130 ausgebildet. Der Winkel α der Flanke 16 ist jedoch größenabhängig, so dass bei einer größeren Pumpe 10 auch der Winkel α der Flanke 16 größer ausgebildet ist. Der Abstand a, der zwischen dem Bügel 11 und dem äußeren Wandbereich 15 des Dämpfungselements 13 vorgesehen ist, ist kleiner ausgebildet als der Abstand b, der zwischen den Bügelenden 111, 112 und der Anlagefläche 130 vorgesehen ist. Dabei entsteht ein Größenunterschied, mit dem eine axiale Verklemmung realisiert werden kann. Mit Hilfe der axialen und radialen Verklemmung des Dämpfungselements 13 mit dem Bügel 11, kann ein gleichmäßiger Druck entlang des Umfangs des Dämpfungselements 13, wie in Figur 2 gezeigt ist, realisiert werden. Wird das Dämpfungselement 13 nur axial mit dem Bügel 11 verklemmt, entsteht eine partielle Pressung zwischen dem Dämpfungselement 13 und der Pumpe 10, so dass sich das Dämpfungselement 1.3 oval verformt. Dadurch kann sich die Pumpe 10 aufgrund schwingender Belastung aus der Halterung 1 lösen.

Das Dämpfungselement 13 ist vorzugsweise aus einem Elastomer ausgebildet. Alternativ kann aber auch ein anderes Material verwendet werden, das zum Dämpfen einer Pumpe 10 geeignet ist. Ferner ist der äußere Wandbereich 15 des Dämpfungselements 13 als eine Nut 17 ausgebildet, wie es in Figur 3 gezeigt ist. Dadurch wird der Bügel 11 vom Dämpfungselement 13 fixiert, so dass ein besserer Halt des Bügels 11 ermöglicht und ein Ausrutschen des Dämpfungselements 13 im Betrieb vermieden wird.

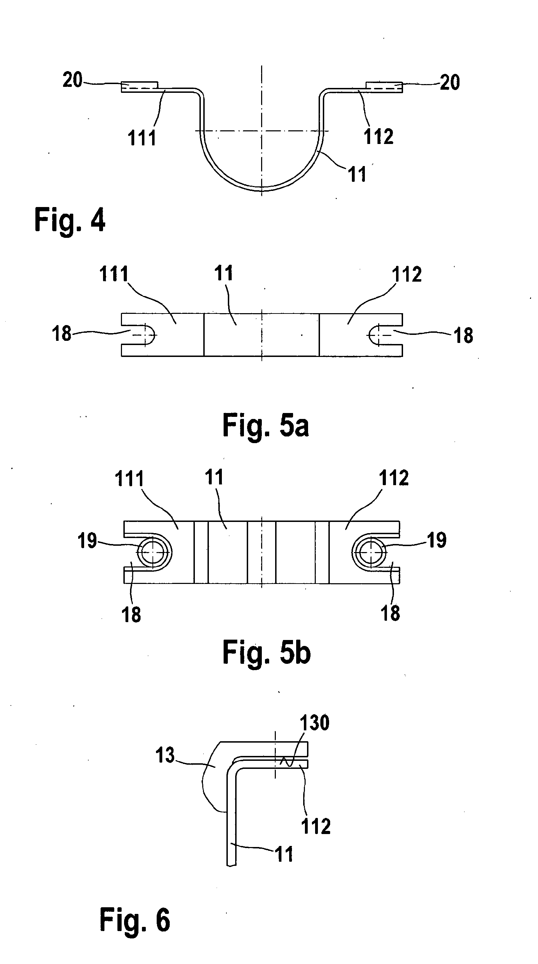

Beim Befestigen des Dämpfungselements 13 zwischen dem Bügel 11 und dem Anbau 12 können große Axialkräfte, bedingt durch die Verschraubung, entstehen. Diese Verspannung im Dämpfungselement 13 gepaart mit der kantigen Geometrie des Bügels 11 kann zu einer Schädigung des Dämpfungselements 13 führen. Um dies zu vermeiden, ist im Bügelende 111, 112, wie in Figur 4 und 5A gezeigt ist, eine Lasche 20 in einer Aussparung 17 eingeprägt. Anstatt der Lasche 20 kann auch eine Buchse 19, wie in Figur 5B gezeigt ist, in der Aussparung 17 der Bügelenden 111, 112 vorgesehen sein. Die Buchse 19 sowie die Lasche 20, die nach Innen umformt sind, sorgen dafür, dass das benötigte Anzugsmoment der Schraubverbindung vom Bügel 11 und dem Anbau 12 nicht zur Schädigung des Dämpfungselements 13 führt. Dadurch ist der Bügel 11, wie in Figur 6 gezeigt ist, vollständig von dem Anbau 12 entkoppelt, so dass die Verspannlänge begrenzt und somit eine Schädigung durch zu hohe Spannung des Dämpfungselements 13 verhindert werden kann. Vorzugsweise ist der Bügel 11 aus Metall ausgebildet. Jedoch kann auch ein anderes Material für den Bügel 11 verwendet werden.

Die Erfindung wird am Beispiel einer Pumpe 10 dargestellt. Jedoch kann die Erfindung auch für andere Aggregate, die an einem Anbau 12 befestigt werden, eingesetzt werden. Entscheidend dabei ist, dass das Dämpfungselement 13 angrenzend an die erste Ausnehmung 131 die zweite Ausnehmung 132 aufweist, die eine radial symmetrische Verformung des Querschnitts der ersten Ausnehmung 131 beim Befestigen des Bügels 11 mit dem Anbau 12 unterstützt. Dadurch kann mit dem Dämpfungselement 13 die gewünschte Lebensdauer der Pumpe 10 realisiert werden. Ferner kann sich das Dämpfungselement 13 aufgrund der zweiten, dritten und vierten Ausnehmungen 132, 133, 134 an die Konturen der Pumpe 10 anpassen.

## Patentansprüche

1. Halterung zum Befestigen eines Aggregats, insbesondere einer Pumpe (10), an einem Anbau (12),
wobei die Halterung (1) einen Bügel (11) und ein Dämpfungselement (13) aufweist,
wobei das Dämpfungselement (13) zentral eine erste Ausnehmung (131) aufweist, die zur Aufnahme des Aggregates vorgesehen ist,
wobei das Dämpfungselement (13) eine Anlagefläche (130) zur Anlage des Bügels (11) aufweist,
wobei der Bügel (11) zwei Bügelenden (111, 112) aufweist, die dazu vorgesehen sind, das Dämpfungselement (13) an dem Anbau (12) zu befestigen, wobei das Dämpfungselement (13) angrenzend an die erste Ausnehmung (131) eine zweite Ausnehmung (132) aufweist, die eine radial symmetrische Verformung des Querschnittes der ersten Ausnehmung (131) beim Befestigen des Bügels (11) an dem Anbau (12) unterstützt,
wobei das Dämpfungselement (13) eine dritte Ausnehmung (133) umfasst, wobei die dritte Ausnehmung (133) als Ausschnitt in einem äußeren Wandbereich (15) des Dämpfungselements (13) ausgebildet ist, der dem Bügel (11) zugewandt ist,
**dadurch gekennzeichnet,**
**dass** die dritte Ausnehmung (133) in einer Ebene des Bügels (11) angeordnet ist,
wobei mindestens zwei Ausschnitte im äußeren Wandbereich (15) des Dämpfungselements (13) angeordnet sind,
wobei die Querschnittsfläche der Ausschnitte abhängig von der Position der ersten Ausnehmung (131) von der Mitte des Bügels (11) bis zum Bügelende (111, 112) zunimmt.

2. Halterung nach Anspruch 1, **dadurch gekennzeichnet, dass** die zweite Ausnehmung (132) als Schlitz ausgebildet ist, der in die erste Ausnehmung (131) mündet.

3. Halterung nach Anspruch 2, **dadurch gekennzeichnet, dass** der Schlitz im Innenbereich (14) des Dämpfungselements (13) radialsymmetrisch zu einem Mittelpunkt der ersten Ausnehmung (131) angeordnet ist.

4. Halterung nach Anspruch 2 oder 3, **dadurch gekennzeichnet, dass** mindestens zwei Schlitze im Innenbereich (14) des Dämpfungselements (13) radial symmetrisch angeordnet sind, wobei der Bügel (11) zwei Enden (111, 112) aufweist, die zur Befestigung an dem Anbau (12) vorgesehen sind, wobei die Schlitze zwischen den Bügelenden (111, 112) vorgesehen sind, wobei der Durchmesser der Schlitze abhängig von der Position der Schlitze in Richtung auf ein Bügelende (111, 112) abnimmt.

5. Halterung nach einem der Ansprüche 1 bis 4, **dadurch gekennzeichnet, dass** eine vierte Ausnehmung (134) als Loch im Dämpfungselement (13) im Bereich der Anlagefläche (130) in einer Ebene des Bügels (11) in einem nicht montierten Zustand vorgesehen ist.

6. Halterung nach Anspruch 5, **dadurch gekennzeichnet, dass** die vierte Ausnehmung (134) mindestens zwei Löcher mit einem unterschiedlichen Durchmesser im Dämpfungselement (13) aufweist.

7. Halterung nach einem der Ansprüche 1 bis 6, **dadurch gekennzeichnet, dass** das Dämpfungselement (13) im Bereich der Anlagefläche (130) in einer Ebene des Bügels (11) in einem nicht montierten Zustand des Bügels (11) breiter ausgebildet ist als der Abstand der Bügelenden (111, 112) bei montiertem Bügel (11), so dass das Dämpfungselement (13) im montierten Zustand des Bügels (11) im Bereich der Anlagefläche (130) durch die Bügelenden (111, 112) zusammengedrückt ist.

8. Halterung nach Anspruch 7, **dadurch gekennzeichnet, dass** das Dämpfungselement (13) im Bereich der Anlagefläche (130) in einer Ebene des Bügels (11) als Flanke (16) keilförmig sich in Richtung der Bügelenden (111, 112) verbreiternd in Richtung der Anlagefläche (130) ausgebildet ist.

## Claims

1. Holder for attaching an assembly, in particular a pump (10), on a mount (12), the holder (1) having a bracket (11) and a damping element (13), the damping element (13) centrally having a first recess (131) that is provided for accommodating the assembly, the damping element (13) having a contact surface (130) for making contact with the bracket (11), the bracket (11) having two bracket ends (111, 112) which are provided for attaching the damping element (13) on the mount (12), adjacent to the first recess (131) the damping element (13) having a second recess (132) that supports a radially symmetrical deformation of the cross section of the first recess (131) when the bracket (11) is attached on the mount (12),
the damping element (13) comprising a third recess (133), the third recess (133) being designed in an outer wall region (15) of the damping element (13) as a cutout that faces the bracket (11),
**characterized in that** the third recess (133) is arranged in a plane of the bracket (11), at least two cutouts being arranged in the outer wall region (15) of the damping element (13), the cross sectional area of the cutouts increasing as a function of the position of the first recess (131) from the middle of the bracket (11) up to the bracket end (111, 112).

2. Holder according to Claim 1, **characterized in that** the second recess (132) is designed as a slot that opens into the first recess (131).

3. Holder according to Claim 2, **characterized in that** the slot is arranged in the inner region (14) of the damping element (13) with radial symmetry in relation to a midpoint of the first recess (131).

4. Holder according to Claim 2 or 3, **characterized in that** at least two slots are arranged with radial symmetry in the inner region (14) of the damping element (13), the bracket (11) having two ends (111, 112) that are provided for attachment on the mount (12), the slots being provided between the bracket ends (111, 112), the diameter of the slots decreasing in the direction of a bracket end (111, 112) as a function of the position of the slots.

5. Holder according to one of Claims 1 to 4, **characterized in that** in a plane of the bracket (11) a fourth recess (134) is provided as a hole in the damping element (13) in the region of the contact surface (130) in an unmounted state.

6. Holder according to Claim 5, **characterized in that** the fourth recess (134) has at least two holes with a different diameter in the damping element (13).

7. Holder according to one of Claims 1 to 6, **characterized in that** in a plane of the bracket (11) the damping element (13) is designed in the region of the contact surface (130) to be wider in an unmounted state of the bracket (11) than the spacing of the bracket ends (111, 112) with a mounted bracket (11) so that in the region of the contact surface (130) the damping element (13) is compressed by the bracket ends (111, 112) in the mounted state of the bracket (11).

8. Holder according to Claim 7, **characterized in that** in a plane of the bracket (11) the damping element (13) is designed in the region of the contact surface (130) as an edge (16) widening in a wedge shape in the direction of the bracket ends (111, 112) in the direction of the contact surface (130).

## Revendications

1. Système d'attache pour la fixation d'un groupe, en particulier d'une pompe (10), sur une construction rapportée (12), le système d'attache (1) présentant un étrier (11) et un élément d'amortissement (13),
l'élément d'amortissement (13) présentant centralement un premier évidement (131) qui est prévu pour recevoir le groupe,
l'élément d'amortissement (13) présentant une surface d'appui (130) pour l'appui de l'étrier (11),
l'étrier (11) présentant deux extrémités d'étrier (111, 112) qui sont prévues pour fixer l'élément d'amortissement (13) à la construction rapportée (12),
l'élément d'amortissement (13) présentant, en position adjacente au premier évidement (131), un deuxième évidement (132) qui favorise une déformation radialement symétrique de la section transversale du premier évidement (131) lors de la fixation de l'étrier (11) à la construction rapportée (12),
l'élément d'amortissement (13) comprenant un troisième évidement (133),
le troisième évidement (133) étant réalisé sous forme de découpe dans une région de paroi extérieure (15) de l'élément d'amortissement (13), qui est tournée vers l'étrier (11),
**caractérisé en ce que**
le troisième évidement (133) est disposé dans un plan de l'étrier (11),
au moins deux découpes étant réalisées dans la région de paroi extérieure (15) de l'élément d'amortissement (13),
la surface en section transversale des découpes augmentant en fonction de la position du premier évidement (131) depuis le centre de l'étrier (11) jusqu'à l'extrémité de l'étrier (111, 112).

2. Système d'attache selon la revendication 1, **caractérisé en ce que** le deuxième évidement (132) est réalisé sous forme de fente qui débouche dans le premier évidement (131).

3. Système d'attache selon la revendication 2, **caractérisé en ce que** la fente est disposée dans la région interne (14) de l'élément d'amortissement (13) de manière radialement symétrique par rapport à un centre du premier évidement (131).

4. Système d'attache selon la revendication 2 ou 3, **caractérisé en ce qu'**au moins deux fentes sont disposées de manière symétrique radialement dans la région interne (14) de l'élément d'amortissement (13), l'étrier (11) présentant deux extrémités (111, 112) qui sont prévues pour la fixation à la construction rapportée (12), les fentes étant prévues entre les extrémités d'étrier (111, 112), le diamètre des fentes diminuant en fonction de la position des fentes dans la direction d'une extrémité d'étrier (111, 112).

5. Système d'attache selon l'une quelconque des revendications 1 à 4, **caractérisé en ce qu'**un quatrième évidement (134) sous forme de trou dans l'élément d'amortissement (13) est prévu dans la région de la surface d'appui (130) dans un plan de l'étrier (11) dans un état non monté.

6. Système d'attache selon la revendication 5, **caractérisé en ce que** le quatrième évidement (134) présente au moins deux trous avec un diamètre différent dans l'élément d'amortissement (13).

7. Système d'attache selon l'une quelconque des revendications 1 à 6, **caractérisé en ce que** l'élément d'amortissement (13) est réalisé dans la région de la surface d'appui (130) dans un plan de l'étrier (11) dans un état non monté de l'étrier (11) sous forme plus large que la distance des extrémités d'étrier (111, 112) lorsque l'étrier (11) est monté, de sorte que l'élément d'amortissement (13), dans l'état monté de l'étrier (11), soit comprimé dans la région de la surface d'appui (130) par les extrémités d'étrier (111, 112).

8. Système d'attache selon la revendication 7, **caractérisé en ce que** l'élément d'amortissement (13) est réalisé dans la région de la surface d'appui (130) dans un plan de l'étrier (11) sous forme de flanc (16) en forme de cale s'élargissant dans la direction des extrémités d'étriers (111, 112) dans la direction de la surface d'appui (130).
